# EUROPEAN PATENT APPLICATION

(11) **EP 2 703 201 A1**
(43) Date of publication of application: **05.03.2014**
(21) Application number: 13180957.6
(22) Date of filing: 20.08.2013
(51) Int. Cl.: B60H 1/32, F25B 29/00, F25B 37/00, F25B 15/00

(54) **A heating and cooling system**

(30) Priority: 28.08.2012 TR 201209862
(71) Applicant: Tofas Turk Otomobil Fabrikasi Anonim Sirketi, Bursa (TR)
(72) Inventor: Ayarturk, Hasan, BURSA (TR)
(74) Representative: Dericioglu Kurt, Ekin

(57) **Abstract**

The present invention relates to a heating and cooling system (1), comprising aseparation vessel (4) which enables to evaporate the solute, a distiller (5) which enables the evaporated solute to be distilled by being separated from the residual solvent a condenser (6), an expansion valve (7), an evaporator (8), a radiator (12) which enables to cool the heat transmission fluid (2), and a composite pressure vessel (9) having a cold chamber (91) in which the solute (22) that passes through the evaporator (8) is collected a hot chamber (92) in which the solvent (21) separated in the distiller (5) is collected and a pump (11) which enables to drive the heat transmission fluid in the cold chamber (91) of the composite pressure vessel (9). In the said system (1), ammonia or lithium bromide can be used .

## Description

### Field of the Invention

The present invention relates to a heating and cooling system which enables to heat and cool the cab as desired particularly in vehicles having an internal combustion engine.

### Background of the Invention

Internal combustion engines used in vehicles enable to move the vehicles by using the energy released as a result of compression of the fuel and air mixture and ignition of the compressed mixture. The heat released as a result of this ignition causes the engine temperature to increase. The engine is cooled in order to prevent the engine from getting overheated and damaged.

The air within the vehicles' passenger cabs is conditioned via various air conditioning systems thereby enabling the passengers to travel comfortably. However the said air conditioning systems in the state of the art are comprised of components with high costs. These systems perform cooling function by using the mechanical energy which is transferred from the vehicle engine to a fan via a shaft. A second cycle is used for performing heating function with the purpose of utilizing the waste heat; however this cycle is comprised of expensive components.

In order to cool the engine and the cab, the excessive heat therein should be removed. In order to heat the cab, heat should be provided to the cab. The said heat transfers are provided by a heat transmission fluid passing through the pipes. In the state of the art, lithium bromide is used as the heat transmission fluid. However, use of this compound in the engine block causes corrosion problems.

In the state of the art, the heat discharged through the vehicle exhausts can only be used for heating the cab's inside. The heat which is not used for the cooling cycle is discharged to the atmosphere.

In the state of the art, when the relative humidity within the vehicle decreases, air conditioning systems humidify this air. However the humidity in the air condenses on the vehicle's windows and causes the windows to fog.

The Chinese patent document no. CN201173148, an application in the state of the art, discloses a collector wherein the waste energy that will be discharged through the exhaust is used.

The Japanese patent document no. JP11142012, an application in the state of the art, discloses a cooling machine.

The United States patent document no. US2009173094, an application in the state of the art, discloses an air conditioner whose operation mode is switchable between cooling mode and heating mode.

The United States patent document no. US6076365, an application in the state of the art, discloses a valve assembly which enables to switch between cooling mode and heating mode and an air conditioning system employing this valve assembly.

The Japanese patent document no. JP2008238906, an application in the state of the art, discloses an electrostatic atomizing device for vehicles.

The German patent document no. DE102005049950, an application in the state of the art, discloses a cooler which uses ammonium and carbon dioxide cycles.

### Summary of the Invention

An objective of the present invention is to provide a heating and cooling system which enables to heat and cool the vehicle cab as desired.

Another objective of the present invention is to provide a heating and cooling system whose heating and cooling efficiency is enhanced.

### Detailed Description of the Invention

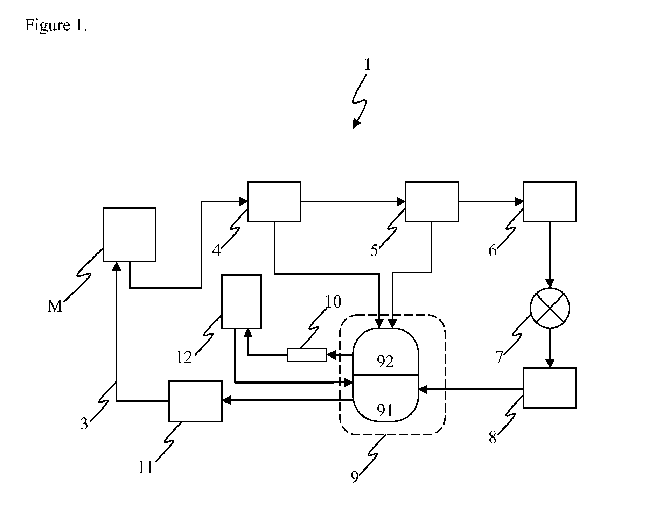

A heating and cooling system developed to fulfill the objectives of the present invention is illustrated in the accompanying figures, in which
Figure 1 is the schematic view of the heating and cooling system.

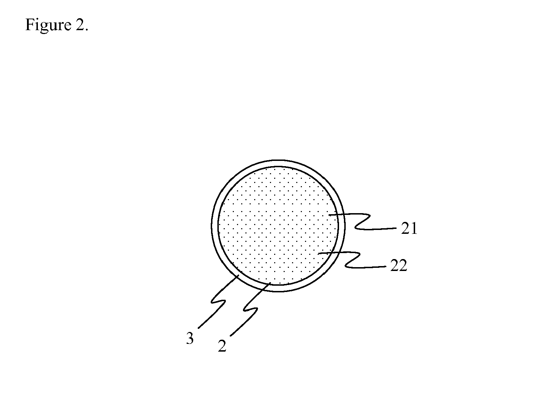

Figure 2 is the sectional view of the pipe.

The components shown in the figures are each given reference numbers as follows:
- 1.: Heating and cooling system
- 2.: Heat transmission fluid
- 21.: Solvent
- 22.: Solute
- 3.: Pipe
- 4.: Separation vessel
- 5.: Distiller
- 6.: Condenser
- 7.: Expansion valve
- 8.: Evaporator
- 9.: Composite pressure vessel
- 91.: Cold chamber
- 92.: Hot chamber
- 10.: Pressure reducer
- 11.: Pump
- 12.: Radiator
- M.: Engine

The inventive heating and cooling system (1) basically comprises
- at least one heat transmission fluid (2) which enables to transfer heat and comprises at least one solvent (21) and at least one solute (22),
- at least one pipe (3) which enables transmission of the heat transmission fluid (2),
- at least one separation vessel (4) which enables to evaporate the solute (22),
- at least one distiller (5) which enables the evaporated solute (22) to be distilled by being separated from the residual solvent (21),
- at least one condenser (6) which enables to condense the distilled solute (22),
- at least one expansion valve (7) which enables to control the flow rate of the condensed solute (22),
- at least one evaporator (8) which enables to evaporate the solute (22) that passes through the expansion valve,
- at least one composite pressure vessel (9) having at least one cold chamber (91) in which the solute (22) that passes through the evaporator (8) is collected and at least one hot chamber (92) in which the solvent (21) separated in the distiller (5) is collected,
- at least one pressure reducer (10) which enables to reduce the pressure of the solvent (21) separated from the solute (22) in the hot chamber (92) of the composite pressure vessel (9) and the pressure of the solvent (21) coming from the distiller (5),
- at least one pump (11) which enables to drive the heat transmission fluid (2) in the cold chamber (91) of the composite pressure vessel (9),
- at least one radiator (12) which enables to cool the heat transmission fluid (2).

In the inventive heating and cooling system (1), the heat transmission fluid (2) that enables to transfer the heat is transmitted via the pipes (3). The cycle which enables the said system (1) to be used for cooling is described as follows. The heat transmission fluid (2) first comes to the separation vessel (4) for evaporation of the solute (22). The solute (22) that is evaporated in the separation vessel (4) comes to the distiller (5) to be cleared of the residues of the solvent (21) which might have remained therein. The solvent (21) residues separated there are sent to the hot chamber (92) of the composite pressure vessel (9). The solute (22) which is cleared of the solvent (21) residues comes to the condenser (6) for being condensed. The condensed solute (22) comes to the evaporator (8) by means of the expansion valve (7) that controls the flow rate. The solute (22) that is evaporated in the evaporator (8) comes to the cold chamber (91) of the composite pressure vessel (9). The solvent (21) which is separated from the solute (22) which is in the hot chamber (92) of the composite pressure vessel (9) is sent to the pressure reducer (10) for reducing pressure thereof. The solute (21) whose pressure is reduced at the pressure reducer (10) is then sent to the radiator (12) for being cooled. The solvent (21) cooled in the evaporator (12) then comes to the cold chamber (91) of the composite pressure vessel (9). The solute (22) and the solvent (21) mix in the cold chamber (91) of the composite pressure vessel (9) and form the heat transmission fluid (2). This heat transmission fluid (2) is drawn by means of the pump (11) and sent to the engine (M) via the pipes (3) to cool the engine (M). The heat transmission fluid (2) which is heated by drawing the waste heat in the engine (M) comes back to the separation vessel (4) and the above described cycle is repeated.

The cycle which enables the inventive heating and cooling system (1) to be used for heating purposes and the cycle which enables the said system to be used for cooling purposes are similar. In the cycle which enables the said system (1) to be used for heating purposes, the heat transmission fluid (2) does not pass through the expansion valve (7) after the condenser (6), it goes directly to the evaporator (8). The part of the solute (22), which cannot condense in the evaporator (8), condenses upon being combined with the solvent (21), which is cooled in the radiator (12), in the cold chamber (91) of the composite pressure vessel (9).

In the inventive heating and cooling system (1), there is at least one heat transmission fluid (2) which enables to transfer heat and comprises at least one solvent (21) and at least one solute (22). In the preferred embodiment of the invention, water is used as the solvent (21). In the said embodiment, compounds such as ammonia, lithium bromide, silica gel are used as the solute (22) but it is not limited with them.

In the case that ammonia is used as the solute (22), a temperature of approximately 90° in the engine (M) cooling pipes is sufficient for evaporating ammonia. However if lithium bromide or silica gel is used as the solute (22), this temperature is not sufficient for evaporating the solute (22). In this case, evaporating the solvent (21) is more suitable than evaporating the solute (22). However the said temperature is not sufficient for evaporating the water which is the solvent (21) either.

In one embodiment of the invention, if lithium bromide or silica gel is used as the solute (22), the above mentioned cycle is carried out at pressures lower than atmosphere pressure. In the said embodiment, instead of evaporating the solute (22), the solvent (21) is evaporated and the cycle is executed accordingly. In other words, the condenser (6), which condenses the evaporated solute (22) in the cycle wherein ammonia is used as the solute (22), condenses the solvent (21) in the cycle wherein lithium bromide or silica gel is used as the solute (22). The expansion valve (7), which enables to control the flow rate of the condensed solute (22) in the cycle wherein ammonia is used as the solute (22), enables to control the flow rate of the solvent (21) in the cycle wherein lithium bromide or silica gel is used as the solute (22). The evaporator (8); which evaporates the solute (22), which passes through the expansion valve (7), in the cycle wherein ammonia is used as the solute (22); evaporates the solvent (21), which passes through the expansion valve (7), in the cycle wherein lithium bromide or silica gel is used as the solute (22).

In this embodiment, pressure of the heat transmission fluid (2) is about 0.5-0.6 bar at the inlet of the engine block (M) and about 0.01 bar at the inlet of the evaporator (8). This way, water, which is the solvent (21), is enabled to be evaporated at a temperature of approximately 90° in the engine (M) cooling pipes (3). Execution of the cycle at pressures lower than atmosphere pressure may cause air to enter into the system (1) from outside. When lithium bromide is used as the solute (22), lithium bromide reacts with the oxygen in the air and may cause corrosion at the engine (M) block. In this embodiment, if the engine (M) block is not made of a corrosion-resistant material, silica gel is preferred as the solute (22).

In one embodiment of the invention, when lithium bromide or silica gel is used as the solute (22), the high temperature at the engine's (M) exhaust outlet is used for evaporating the water which is the solvent (21). In this embodiment, the heat at the engine's (M) exhaust outlet is transferred to the hot chamber (92) of the composite pressure vessel (9). The said heat spreads within the hot chamber (92) preferably by the help of fins. This way temperature of the heat transmission fluid (2) within the hot chamber (92) is raised to a value higher than the boiling temperature of the water which is the solvent (21). In this embodiment, since lithium bromide and silica gel will not evaporate at the said temperatures, there is no need to use the distiller (5). In this embodiment, the solvent (21) goes to the condenser (6) after the separation vessel (4) without going to the distiller (5). In other words, the distiller (5) is by-passed.

It is possible to develop various embodiments of the inventive heating and cooling system (1). The invention can not be limited to the examples described herein; it is essentially as defined in the claims.

## Claims

1. A heating and cooling system (1) basically **comprising**
- at least one heat transmission fluid (2) which enables to transfer heat and comprises at least one solvent (21) and at least one solute (22),
- at least one pipe (3) which enables transmission of the heat transmission fluid (2),
- at least one separation vessel (4) which enables to evaporate the solute (22),
- at least one distiller (5) which enables the evaporated solute (22) to be distilled by being separated from the residual solvent (21),
- at least one condenser (6) which enables to condense the distilled solute (22),
- at least one expansion valve (7) which enables to control the flow rate of the condensed solute (22),
- at least one evaporator (8) which enables to evaporate the solute (22) that passes through the expansion valve (7),
- at least one radiator (12) which enables to cool the heat transmission fluid (2), and **characterized by**
- at least one composite pressure vessel (9) having at least one cold chamber (91) in which the solute (22) that passes through the evaporator (8) is collected and at least one hot chamber (92) in which the solvent (21) separated in the distiller (5) is collected,
- at least one pump (11) which enables to drive the heat transmission fluid (2) in the cold chamber (91) of the composite pressure vessel (9).

2. A heating and cooling system (1) according to Claim 1, **characterized in that** the heat transmission fluid (2) goes directly to the evaporator (8) after the condenser (6) in the cycle which enables the system to be used for heating purposes.

3. A heating and cooling system (1) according to any one of the preceding claims **characterized by** at least one pressure reducer (10) which enables to reduce the pressure of the solvent (21) separated from the solute (22) in the hot chamber (92) of the composite pressure vessel (9) and the pressure of the solvent (21) coming from the distiller (5).

4. A heating and cooling system (1) according to any one of the preceding claims, **characterized in that** water is used as the solvent (21).

5. A heating and cooling system (1) according to any one of Claim 1, Claim 2 or Claim 3, **characterized in that** lithium bromide is used as the solute (22).

6. A heating and cooling system (1) according to any one of Claim 1, Claim 2 or Claim 3, **characterized in that** silica gel is used as the solute (22).

7. A heating and cooling system (1) according to any one of Claim 5 or Claim 6, **characterized in that** the distiller (5) is by-passed.

8. A heating and cooling system (1) according to any one of Claims 5 to 7, **characterized in that** the solvent (21) is evaporated instead of the solute (22) and the cycle is executed accordingly.

9. A heating and cooling system (1) according to any one of Claims 5 to 8, **characterized in that** it is operated at a pressure lower than atmosphere pressure in order to evaporate the solvent (21).

10. A heating and cooling system (1) according to any one of Claims 5 to 8, **characterized in that** the solvent (21) is evaporated by using the heat drawn from the exhaust part of the engine (M).
